# EUROPEAN PATENT SPECIFICATION

(11) **EP 3 974 282 B1**
(45) Date of publication and mention of the grant of the patent: **30.11.2022**
(21) Application number: 21199119.5
(22) Date of filing: 27.09.2021
(51) Int. Cl.: B61D 27/00

(54) **AIR CONDITIONER FOR RAILWAY VEHICLE**
KLIMAANLAGE FÜR SCHIENENFAHRZEUG
CLIMATISEUR POUR VÉHICULE FERROVIAIRE

(30) Priority: 28.09.2020 JP 2020161710
(43) Date of publication of application: 30.03.2022
(73) Proprietor: Hitachi, Ltd., Chiyoda-ku, Tokyo 100-8280 (JP)
(72) Inventor: INOUE, Akinori, Chiyoda-ku, 1008280 (JP); ISHIMOTO, Hirokazu, Chiyoda-ku, 1008280 (JP); TAGUCHI, Tomoaki, Chiyoda-ku, 1008280 (JP)
(74) Representative: Mewburn Ellis LLP

(56) References cited:
- EP-A1- 3 385 587
- JP-A- H05 147 432
- JP-A- 2007 223 450
- JP-A- 2018 131 037

## Description

### BACKGROUND OF THE INVENTION

### 1. Field of the Invention

The present invention relates to an air conditioner for a railway vehicle.

### 2. Description of the Related Art

In the related art, in a railroad vehicle such as a commuter train, except for a part of pendulum type limited express railroad vehicles or the like, an air conditioner for a railroad vehicle (hereinafter referred to as an air conditioner) that adjusts a temperature and humidity environment inside the railroad vehicle is mounted on a roof of the vehicle.

A housing of an air conditioner incorporated with a refrigeration cycle is partitioned into an indoor unit chamber that mainly accommodates an indoor heat exchanger and an indoor fan, and an outdoor unit chamber that mainly accommodates an outdoor heat exchanger and an outdoor fan. The outdoor unit chamber includes a device chamber provided with a compressor or the like. JP-A-2018-131037 discloses a technique relating to a housing of an air conditioner for a railroad vehicle provided on a roof of a railroad vehicle.

As described above, the housing of the air conditioner provided for the railroad vehicle includes the indoor unit chamber that mainly accommodates the indoor heat exchanger and the indoor fan, the outdoor unit chamber that mainly accommodates the outdoor heat exchanger and the outdoor fan, and a partition plate that partitions the indoor unit chamber and the outdoor unit chamber. A suction port located on an upstream side of the indoor fan provided in the indoor unit chamber is opened to the inside of the indoor unit chamber in order to attract air from the inside of the railroad vehicle to the inside of the indoor unit chamber.

The air inside the vehicle sucked by the indoor fan is discharged toward the indoor heat exchanger, which is provided in a flow path on a downstream side of the indoor fan, and in a process of passing through the indoor heat exchanger, the heat in the vehicle is transferred to a refrigerant circulating in the refrigeration cycle including the indoor heat exchanger, whereby conditioned air whose temperature and humidity are harmonized is obtained and re-supplied to the inside of the vehicle.

A pressure in the indoor unit chamber provided with the indoor fan is a negative pressure (equal to or lower than atmospheric pressure) in order to attract the air inside the vehicle by the indoor fan. In the outdoor unit chamber provided with the outdoor fan, in order to maintain the atmospheric pressure, a pressure acts on the partition plate that partitions the indoor unit chamber and the outdoor unit chamber from a side of the outdoor unit chamber to a side of the indoor unit chamber.

Since a wiring that supplies electric power to the indoor fan penetrates through the partition plate, if the wiring penetrating through the partition plate is not appropriately sealed, combined with the action of the above pressure, rainwater or the like in the outdoor unit chamber may enter the indoor unit chamber through a gap of the wiring penetrating through the partition plate. EP 3385587 A proposes an elastic body for closure, an air conditioning device, and a closure method.

### SUMMARY OF THE INVENTION

An object of the invention is to provide an air conditioner for a railway vehicle having a configuration in which a wiring penetrating through a partition plate can be reliably sealed with a small number of manufacturing steps.

In order to solve the above problems, the present invention provides one representative air conditioner for a railway vehicle according to claim 1.

According to the present invention, it is possible to provide an air conditioner for a railway vehicle having a configuration in which a wiring penetrating through a partition plate can be reliably sealed with a small number of manufacturing steps.

Problems, configurations, and effects other than those described above will be clarified by the following description of embodiments.

### BRIEF DESCRIPTION OF THE DRAWINGS

FIG. 1 is a perspective view of an entire air conditioner housing according to the present embodiment.
FIG. 2 is a perspective view of a partition plate through which a wiring penetrates on a side of an indoor unit chamber.
FIG. 3 is a perspective view of the partition plate through which the wiring penetrates on a side of a device chamber adjacent to the indoor unit chamber.
FIG. 4 is a cross-sectional view of the partition plate through which the wiring penetrates.

### DESCRIPTION OF THE PREFERRED EMBODIMENTS

A railway vehicle is a generic term for vehicles that are operated along a laid track, and means a railroad vehicle, a road surface train, a new traffic system vehicle, a monorail vehicle, or the like. Here, an embodiment of the invention will be described as an example of the railroad vehicle as a representative example of the railway vehicle with reference to the drawings.

Hereinafter, an embodiment of the invention will be described by taking, as an example, an air conditioner for a railroad vehicle provided on a roof of the railroad vehicle with reference to the drawings. First, directions used to describe the embodiments will be defined. A longitudinal direction or a rail direction of an air conditioner housing (railroad vehicle) is referred to as an x direction, a width direction or a sleeper direction of the air conditioner housing (railroad vehicle) is referred to as a y direction, and a vertical direction or a height direction of the air conditioner housing (railroad vehicle) is referred to as a z direction. Hereinafter, the directions may be simply referred to as the x direction, the y direction, and the z direction.

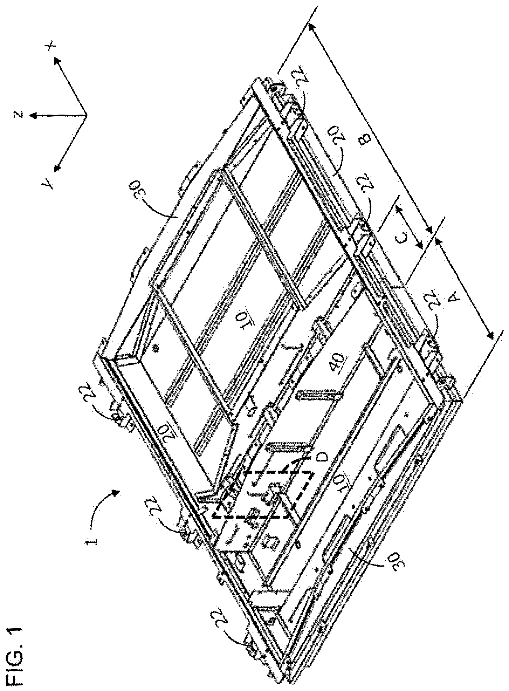

FIG. 1 is a perspective view of an entire air conditioner housing according to the present embodiment. An air conditioner housing 1 is a substantially rectangular parallelepiped having a dimension in the z direction that is smaller than a dimension in the x direction and a dimension in the y direction, and includes an indoor unit chamber A provided with an indoor fan (not shown) and an indoor heat exchanger (not shown), and an outdoor unit chamber B provided with an outdoor fan (not shown) and an outdoor heat exchanger (not shown) along the x direction. The outdoor unit chamber B may include a device chamber C provided with a compressor (not shown), an accumulator (not shown), or the like. When no device chamber C is present, the entire outdoor unit chamber B is treated as the device chamber.

The air conditioner housing 1 includes a bottom plate 10 that is common to the indoor unit chamber A and the outdoor unit chamber B, side plates 20 that are erected at both end portions of the bottom plate 10 in the y direction, end plates 30 that are erected at both end portions of the bottom plate 10 in the x direction, and an upper surface plate (not shown) that is placed on upper ends of the side plates 20 and the end plates 30. The indoor unit room A is partitioned by a partition plate 40 from the device chamber (for example, the outdoor unit chamber B or the device chamber C) adjacent to the indoor unit chamber A.

The bottom plate 10, the side plates 20, and the end plates 30 each include a reinforcing member for increasing rigidity. Each side plate 20 is provided with attachment legs 22 provided discretely along the x direction for fixing the air conditioner housing 1 to the roof of the railroad vehicle.

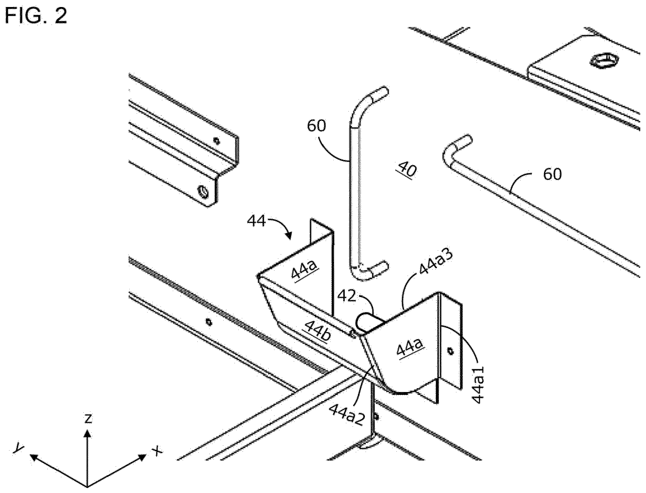

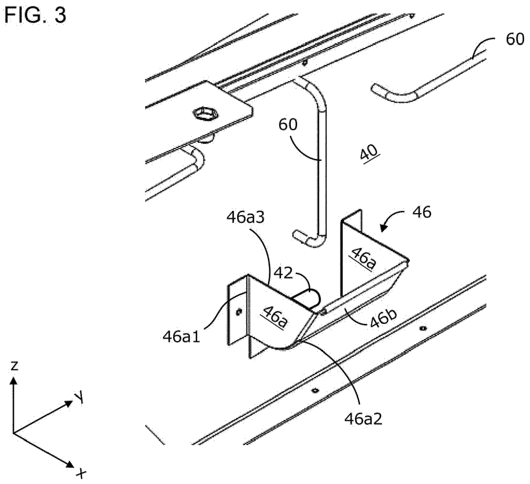

FIG. 2 is a perspective view of the partition plate through which a wiring penetrates on a side of the indoor unit chamber A. FIG. 3 is a perspective view of the partition plate through which the wiring penetrates on a side of the device chamber C adjacent to the indoor unit chamber A. An indoor unit chamber side seal bearing unit 44 is provided on the side of the indoor unit chamber A of the partition plate 40, and a device chamber side seal bearing unit 46 is provided on the side of the device chamber (the outdoor unit chamber B or the device chamber C) adjacent to the indoor unit chamber A of the partition plate 40.

The indoor unit chamber side seal bearing unit 44 includes a pair of end plates 44a and a curved plate 44b bridged over the pair of end plates 44a, and has a form of opening (upper part) in the z direction. An outer shape (contour shape projected onto an x-z plane) of each end plate 44a viewed in the y direction (a direction in which the pair of end plates 44a overlap each other) is a substantially trapezoidal shape including a perpendicular portion 44a1 that abuts on the partition plate 40, a curved portion 44a2 that extends from a lower end portion of the perpendicular portion 44a1 to a negative side in the x direction (normal direction of the partition plate 40) and a positive side in the z direction while drawing an arc, and a horizontal portion 44a3 that connects an upper end portion of the curved portion 44a2 and an upper end portion of the perpendicular portion 44a1 substantially horizontally.

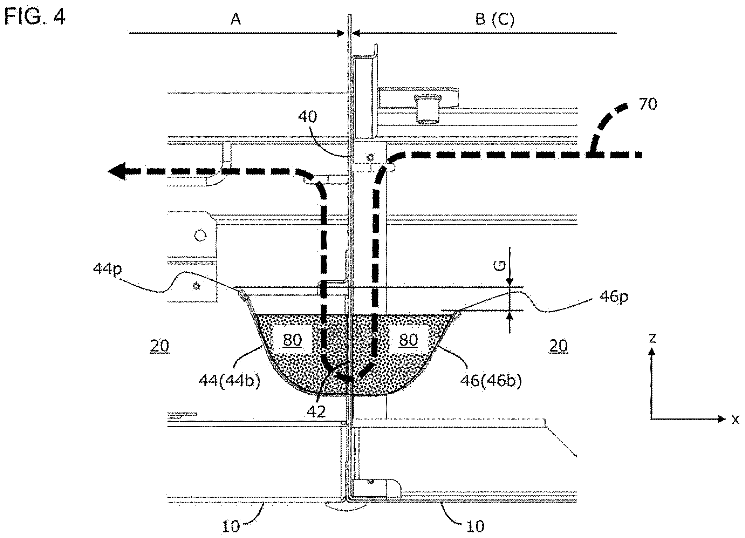

The device chamber side seal bearing unit 46 includes a pair of end plates 46a and a curved plate 46b bridged over the pair of end plates 46a, similarly to the form of the indoor unit chamber side seal bearing unit 44. The outer shape of the end plate 46a includes a perpendicular portion 46a1, a curved portion 46a2, and a horizontal portion 46a3. However, since the dimension of the device chamber side seal bearing unit 46 in the z direction is smaller than that of the indoor unit chamber side seal bearing unit 44, as will be described later with reference to FIG. 4, an upper edge 46p of the device chamber side seal bearing unit 46 is set to be lower by a dimension G in the z direction than an upper edge 44p of the indoor unit chamber side seal bearing unit 44 in the z direction.

In FIGS. 2 and 3, the indoor unit chamber side seal bearing unit 44 and the device chamber side seal bearing unit 46 are provided in a form of covering a hole 42 and facing each other via the partition plate 40. The hole 42 is provided in the partition plate 40 and is penetrated by a wiring 70 from both sides of the partition plate 40. In terms of the hole 42, the horizontal portions 44a3 and 46a3, which form the upper edges of the indoor unit chamber side seal bearing portion 44 and the device chamber side seal bearing portion 46, respectively, are provided at positions higher than the hole 42 in the z direction, and the indoor unit chamber side seal bearing portion 44 and the device chamber side seal bearing portion 46 are fixed to the both sides of the partition plate 40 in the form of covering the hole 42. In other words, it can be said that an accommodating unit that has an opened upper part and is capable of storing a sealing material is formed by the indoor unit chamber side seal bearing unit 44 and the device chamber side seal bearing unit 46, and a center of the accommodating unit is partitioned by the partition plate 40.

Electric wire supports 60 (see FIGS. 2 and 3) extending in the z direction are provided on the partition plate 40 on an upper side (z direction) of the indoor unit chamber side seal bearing unit 44 and the device chamber side seal bearing unit 46.

FIG. 4 is a cross-sectional view of the partition plate penetrated by the wiring. A path of the wiring 70 that supplies the electric power to an electric motor of the indoor fan provided in the indoor unit chamber A from a side of the device chamber C (for example, the outdoor unit chamber B or the device chamber C) adjacent to the indoor unit chamber A will be described. The wiring 70 extending horizontally from the outdoor unit chamber B (the device chamber C) toward the indoor unit chamber A hangs down to the negative side in the z direction along the electric wire supports 60 provided on the side of the outdoor unit chamber B (the device chamber C) of the partition plate 40 as shown by an alternate long and short dash line, passes through the hole 42 provided in the partition plate 40, bends, and extends toward the side of the indoor unit chamber A. At this time, when the wiring 70 is inserted along the inner side of the curved plate 46b of the device chamber side seal bearing unit 46, the curved plate 46b serves as a guide, and a tip of the wiring 70 is forced to face the hole 42.

The wiring 70 extending to the side of indoor unit chamber A rises onto the electric wire supports 60 on the positive side in the z direction, extends along the electric wire supports 60, and then extends horizontally and is connected to a terminal block of the indoor fan (not shown) provided in the indoor unit chamber A. At this time, since the wiring 70 passing through the hole 42 is guided along the inside of the curved plate 44b of the indoor unit chamber side seal bearing unit 44, the tip end of the wiring 70 is forced to face the upper side in the z direction. As described above, the wiring 70 can be easily provided from the side of the device chamber C to the side of the indoor unit chamber A through the hole 42.

After the wiring 70 is fixed to the electric wire supports 60 or the like provided in the air conditioner housing 1 and the wiring 70 is positioned, a sealing material 80, which is a filler, is poured into the indoor unit chamber side seal bearing unit 44 and the device chamber side seal bearing unit 46, and is cured.

Since the sealing material 80 poured into the indoor unit chamber side seal bearing portion 44 and the device chamber side seal bearing portion 46 fills a gap between bundles of the wiring 70 and a peripheral portion of the wiring 70 penetrating the hole 42 of the partition plate 40 without gaps, the periphery of the wiring 70 penetrating the partition plate 40 can be firmly sealed (airtight and watertight treatment) . Further, since the sealing material 80 poured into the accommodating unit formed by the indoor unit chamber side seal bearing unit 44 and the device chamber side seal bearing unit 46 is maintained in a stable state, an operator who performs manufacturing work of the air conditioner can be engaged with other operations without particularly paying attention until the sealing material 80 is cured.

In the air conditioner having the above configuration, after the wiring 70 is fixed to the air conditioner housing 1 in a form of penetrating the partition plate 40, by simply filling the sealing material 80, the wiring 70 penetrating the partition plate 40 can be more reliably sealed without requiring a large number of steps. Therefore, it is possible to provide the air conditioner for a railroad vehicle having a configuration in which the wiring 70 penetrating the partition plate 40 can be reliably sealed with a small number of manufacturing steps.

Further, according to the present embodiment, even if the sealing material 80 is deteriorated or a sealing effect is lost for some reason, it is possible to prevent rainwater or the like from entering the indoor unit chamber A maintained at the negative pressure through the hole 42 from the device chamber C. An operation and configuration thereof will be described below.

In FIG. 4, when the indoor fan is operated, the upper edge (upper end portion) 44p in the z direction of the indoor unit chamber side seal bearing unit 44 provided on the side of the indoor unit chamber A maintained at the negative pressure is set to be higher by the dimension G in the z direction than the upper edge (upper end portion) 46p of the device chamber side seal bearing unit 46 provided on the side of the device chamber (for example, the outdoor unit chamber B, the device chamber C, or the like) maintained at the atmospheric pressure.

The dimension G is determined with reference to a specification point static pressure at a rated flow rate of the indoor fan. For example, assuming that the specification point static pressure of the fan is 200 Pa (Pascal, about 20 mm Aq, equivalent to a height of a water column 20 mm), the dimension G is set to a dimension about 25 mm with a slight margin at 20 mm.

According to the present embodiment, even when a seal function is lost and rainwater or the like is sucked from the side of the device chamber C adjacent along the gap between the seal material 80 and the wiring 70 to the side of the indoor unit chamber A, since the upper edge 44p of the indoor unit chamber side seal bearing portion 44 is located 25 mm (dimension G) high in the z direction from the upper surface of the sealing material 80 of the indoor unit chamber side seal bearing portion 44, infiltrated water can only infiltrate from an upper surface of the sealing material 80 to the position 20 mm (specification point static pressure of the indoor fan) in the z direction.

With the above configuration, even when the seal function of the sealing material 80 flowing into the indoor unit chamber side seal bearing unit 44 and the device chamber side seal bearing unit 46 with respect to the wiring 70 is lost, the rainwater entering the indoor unit chamber A is only retained below the upper edge 44p of the indoor unit chamber side seal bearing unit 44. Therefore, it is possible to prevent the rainwater entering the indoor unit chamber A from being sucked from the suction port of the indoor fan and scattered into the inside of the railroad vehicle, and thus it is possible to provide the air conditioner for a railroad vehicle having higher comfort and reliability.

As shown in FIGS. 2 and 3, an example is shown in which the indoor unit chamber side seal bearing portion 44 and the device chamber side seal bearing portion 46 are configured by members separate from the partition plate 40, the partition plate 40 may be press-processed to form the indoor unit chamber side seal bearing portion 44 or the device chamber side seal bearing portion 46 integrated with the partition plate 40, and only the indoor unit chamber side seal bearing portion 44 or the device chamber side seal bearing portion 46 not integrally formed with the partition plate 40 may be prepared as a separate member to join to the partition plate 40.

The invention is not limited to the above-described embodiments, and includes various modifications other than the above within the scope of the claims.

## Claims

1. An air conditioner for a railway vehicle, comprising:
an indoor unit chamber (A) provided with an indoor fan;
a device chamber (C) adjacent to the indoor unit chamber; and
a partition plate (40) that partitions the indoor unit chamber and the device chamber, wherein
the partition plate has:
a hole (42) through which a wiring (70) connecting the indoor unit chamber and the device chamber is passed;
an indoor unit chamber side seal bearing unit (44) provided on a surface of a side of the indoor unit chamber in a form of covering the hole; and
a device chamber side seal bearing unit (46) provided on a surface of a side of the device chamber in a form of covering the hole, and wherein the air conditioner is **characterized in that**:
the indoor unit chamber side seal bearing unit and the device chamber side seal bearing unit form an accommodating unit configured to store a poured filler (80); and
the indoor unit chamber side seal bearing unit and the device chamber side seal bearing unit are filled with the poured filler in a state where the wiring penetrates through the hole.

2. The air conditioner for a railway vehicle according to claim 1, wherein
at least one of the indoor unit chamber side seal bearing unit (44) and the device chamber side seal bearing unit (46) includes a pair of end plates (44a, 46a) and a curved plate (44b, 46b) bridged over the pair of endplates, and has an opened upper part.

3. The air conditioner for a railway vehicle according to claim 2, wherein
an outer shape of each of the end plates (44a, 46a) viewed in a direction in which the pair of end plates overlap each other includes:
a perpendicular portion (44a1, 46a1) that abuts on the partition plate (40);
a curved portion (44a2, 46a2) that extends from a lower end portion of the perpendicular portion in a normal direction and a height direction of the partition plate while drawing an arc; and
a horizontal portion (44a3, 46a3) that connects an upper end portion of the curved portion and an upper end portion of the perpendicular portion in a substantially horizontal manner.

4. The air conditioner for a railway vehicle according to claim 3, wherein
an upper end portion (44p) of the indoor unit chamber side seal bearing unit (44) is located at a position higher than an upper end portion (46p) of the device chamber side seal bearing unit (46).

5. The air conditioner for a railway vehicle according to claim 4, wherein
A height dimension from the upper end portion (46p) of the device chamber side seal bearing unit (46) to the upper end portion (44p) of the indoor unit chamber side seal bearing unit (44) is larger than a height of a water column determined based on a specification point static pressure of the indoor fan.

## Patentansprüche

1. Klimaanlage für ein Schienenfahrzeug, die Folgendes umfasst:
eine Inneneinheitskammer (A), die mit einem Innenlüfter bereitgestellt ist;
eine Vorrichtungskammer (C), die zu der Inneneinheitskammer benachbart ist; und
eine Trennplatte (40), die die Inneneinheitskammer von der Vorrichtungskammer trennt, wobei
die Trennplatte Folgendes aufweist:
ein Loch (42), durch das eine Verkabelung (70) geführt ist, die die Inneneinheitskammer mit der Vorrichtungskammer verbindet;
eine Inneneinheitskammer-seitige Dichtungslagereinheit (44), die auf einer Fläche einer Seite der Inneneinheitskammer in einer das Loch bedeckenden Form bereitgestellt ist; und
eine Vorrichtungskammer-seitige Dichtungslagereinheit (46), die auf einer Fläche einer Seite der Vorrichtungskammer in einer das Loch bedeckenden Form bereitgestellt ist, und wobei die Klimaanlage **dadurch gekennzeichnet ist, dass**:
die Inneneinheitskammer-seitige Dichtungslagereinheit und die Vorrichtungskammer-seitige Dichtungslagereinheit eine Aufnahmeeinheit bilden, die ausgelegt ist, um eine eingefüllte Füllmasse (80) aufzunehmen; und
die Inneneinheitskammer-seitige Dichtungslagereinheit und die Vorrichtungskammer-seitige Dichtungslagereinheit in einem Zustand mit der eingefüllten Füllmasse gefüllt werden, in dem die Verkabelung durch das Loch verläuft.

2. Klimaanlage für ein Schienenfahrzeug nach Anspruch 1, wobei
zumindest eine aus der Inneneinheitskammer-seitigen Dichtungslagereinheit (44) und der Vorrichtungskammer-seitigen Dichtungslagereinheit (46) ein Paar von Endplatten (44a, 46a) und eine das Paar von Endplatten überbrückende gekrümmte Platte (44b, 46b) umfasst und einen offenen Oberteil aufweist.

3. Klimaanlage für ein Schienenfahrzeug nach Anspruch 2, wobei
die Außenform jeder Endplatte (44a, 46a), in einer Richtung betrachtet, in der das Paar von Endplatten einander überlappt, Folgendes umfasst:
einen vertikalen Abschnitt (44a1, 46a1), der an die Trennplatte (40) angrenzt;
einen gekrümmten Abschnitt (44a2, 46a2), der sich von einem unteren Endabschnitt des vertikalen Abschnitts in einer normalen Richtung und einer Höhenrichtung der Trennplatte erstreckt und dabei einen Bogen bildet; und
einen horizontalen Abschnitt (44a3, 46a3), der einen oberen Endabschnitt des gekrümmten Abschnitts und einen oberen Endabschnitt des vertikalen Abschnitts auf eine im Wesentlichen horizontale Weise verbindet.

4. Klimaanlage für ein Schienenfahrzeug nach Anspruch 3, wobei ein oberer Endabschnitt (44p) der Inneneinheitskammer-seitigen Dichtungslagereinheit (44) an einer höheren Position angeordnet ist als ein oberer Endabschnitt (46p) der Vorrichtungskammer-seitigen Dichtungslagereinheit (46).

5. Klimaanlage für ein Schienenfahrzeug nach Anspruch 4, wobei eine Höhenabmessung vom unteren Endabschnitt (46p) der Vorrichtungskammer-seitigen Dichtungslagereinheit (46) zu dem oberen Endabschnitt (44p) der Inneneinheitskammer-seitigen Dichtungslagereinheit (44) größer als eine Höhe einer basierend auf einem statischen Druckspezifizierungspunkt des Innenlüfters bestimmten Wassersäule ist.

## Revendications

1. Climatiseur pour un véhicule ferroviaire, comprenant :
une chambre d'unité intérieure (A) pourvue d'un ventilateur intérieur ;
une chambre de dispositif (C) adjacente à la chambre d'unité intérieure ; et
une plaque de séparation (40) qui sépare la chambre d'unité intérieure et la chambre de dispositif, dans lequel
la plaque de séparation comprend :
un trou (42) à travers lequel un câblage (70) reliant la chambre d'unité intérieure et la chambre de dispositif est passé ;
une unité de palier d'étanchéité côté chambre d'unité intérieure (44) prévue sur une surface d'un côté de la chambre d'unité intérieure sous une forme recouvrant le trou ; et
une unité de palier d'étanchéité côté chambre de dispositif (46) prévue sur une surface d'un côté de la chambre de dispositif sous une forme recouvrant le trou, et dans lequel le climatiseur est **caractérisé en ce que** :
l'unité de palier d'étanchéité côté chambre d'unité intérieure et l'unité de palier d'étanchéité côté chambre de dispositif forment une unité de logement configurée pour stocker une charge déversée (80) ; et
l'unité de palier d'étanchéité côté chambre d'unité intérieure et l'unité de palier d'étanchéité côté chambre de dispositif sont remplies de la charge déversée dans un état où le câblage pénètre à travers le trou.

2. Climatiseur pour un véhicule ferroviaire selon la revendication 1, dans lequel
au moins l'une de l'unité de palier d'étanchéité côté chambre d'unité intérieure (44) et de l'unité de palier d'étanchéité côté chambre de dispositif (46) comprend une paire de plaques d'extrémité (44a, 46a) et une plaque incurvée (44b, 46b) s'étendant sous forme d'un pont sur la paire de plaques d'extrémité, et présente une partie supérieure ouverte.

3. Climatiseur pour un véhicule ferroviaire selon la revendication 2, dans lequel
une forme extérieure de chacune des plaques d'extrémité (44a, 46a) observée dans une direction dans laquelle la paire de plaques d'extrémité se chevauchent l'une l'autre comprend :
une partie perpendiculaire (44a1, 46a1) qui vient en butée sur la plaque de séparation (40) ;
une partie incurvée (44a2, 46a2) qui s'étend à partir d'une partie d'extrémité inférieure de la partie perpendiculaire dans une direction normale et une direction de hauteur de la plaque de séparation tout en dessinant un arc ; et
une partie horizontale (44a3, 46a3) qui relie une partie d'extrémité supérieure de la partie incurvée et une partie d'extrémité supérieure de la partie perpendiculaire d'une manière sensiblement horizontale.

4. Climatiseur pour un véhicule ferroviaire selon la revendication 3, dans lequel
une partie d'extrémité supérieure (44p) de l'unité de palier d'étanchéité côté chambre d'unité intérieure (44) est située dans une position plus haute qu'une partie d'extrémité supérieure (46p) de l'unité de palier d'étanchéité côté chambre de dispositif (46).

5. Climatiseur pour un véhicule ferroviaire selon la revendication 4, dans lequel
une dimension de hauteur de la partie d'extrémité supérieure (46p) de l'unité de palier d'étanchéité côté chambre de dispositif (46) à la partie d'extrémité supérieure (44p) de l'unité de palier d'étanchéité côté chambre d'unité intérieure (44) est supérieure à une hauteur d'une colonne d'eau déterminée sur la base d'une pression statique de point de spécification du ventilateur intérieur.
